# EUROPEAN PATENT SPECIFICATION

(11) **EP 1 769 710 B1**
(45) Date of publication and mention of the grant of the patent: **10.09.2008**
(21) Application number: 06020700.8
(22) Date of filing: 02.10.2006
(51) Int. Cl.: A47J 37/04

(54) **Support for blocking different kinds of skewers, allowing the motorized rotation thereof**
Stützvorrichtung für verschiedene Arten von Spiessen, die ihre motorbetriebene Drehung ermöglicht
Support pour types différents de brochette, pour permettre leur rotation motorisée

(30) Priority: 03.10.2005 IT PS20050018
(43) Date of publication of application: 04.04.2007
(73) Proprietor: Bonazza, Gabriele, 61100 Pesaro (IT)
(72) Inventor: Bonazza, Gabriele, 61100 Pesaro (IT)
(74) Representative: Negrini, Elena

(56) References cited:
- WO-A-94/23628
- CY-A- 2 420
- US-A- 3 734 740
- US-A- 5 379 686
- US-A- 5 720 217
- US-A1- 2005 188 858

## Description

The present invention relates to the technical field of the cooking equipments for meat or fish or for other alimentary substances by means of skewers, in particular it refers to a support for holding and blocking the ends of different kinds of skewers, made of wood or made of metal, allowing the motorized rotation thereof.

In kitchens ovens the skewers usually are supported by a extractable grill and they must be turned manually, to assure an uniformed cooking of the food. In order to achieve said operation, it is necessary to open the front door, with consequent dispersion of heat and risk of burns. Also in the barbecues the position closed to the heat source it makes difficult the turn the skewers.

Document US-A-5 379 686 discloses a skewer support having a body made of a single integral part, an axial seat, a frame with rotation possibility connected to the body, ad a gear coupled with the body.

The subject of the present invention is to ensure a fast and safe blocking of the ends of the wooden or metal skewers, with circular or rectangular section, or with any other kind of shape, allowing the motorized rotation thereof. Said object can be achieved according to the matter of the claims.

The support of the present invention comprises a body having a seat for supporting and fixing the ends of a skewer, support and fixing means which allow the body to be applied on a frame, allowing the rotation thereof and by transmission member, for transmitting rotating motion that a motor transmits to the whole battery of skewers. Each skewer has an end connected to a motorized support and the other end is supported by a common support, typically a cavity seat.

The body with the housing seat for the end of the skewer is constituted by two or more parts maintained in approached position by means of an external shell.

Said body is carried out by a heat resistant material and preferably by pliable material, such as for example "Santoprene®", for adapting itself to the various kinds of skewers.

The front part of the housing seat of the end of the skewer becomes wider opportunely, in a manner to facilitate the insertion thereof.

The characteristics of the invention are underlined in the following with particular reference to the attached drawings, in which:
- figure 1 shows a longitudinal section view of a support, with the skewer inserted therein;
- figure 2 shows an exploded view of the parts constituting the support;

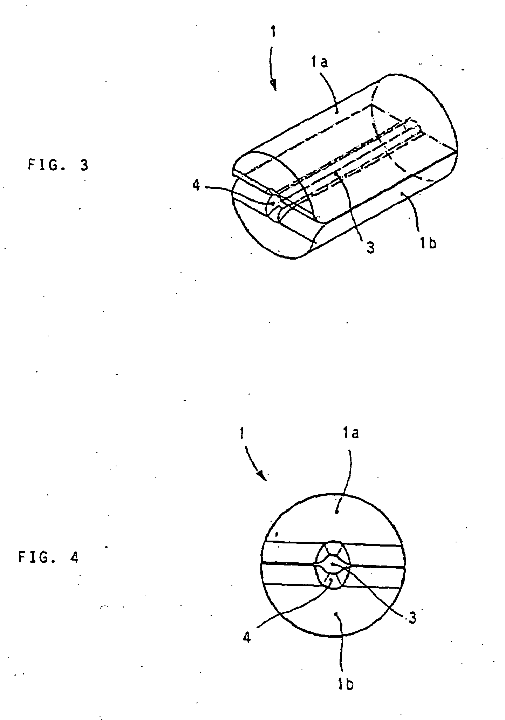

- figure 3 shows perspective view of the body with the housing seat of the skewer, which, as shown in the example in drawing, is carried out in 2 coupled parts;
- figure 4 shows the corresponding front view.

In said figures the numeral 1 indicates the overall body for the fixed blocking of an end of the skewer 2, which is inserted in the appropriate axial seat 3. In the example of the figure the body 1 is constituted by two parts 1a and 1b mutually approached in symmetrical position. In order to facilitate the forced insertion of the skewer, the axial seat becomes wider with a flair 4 at the front side.

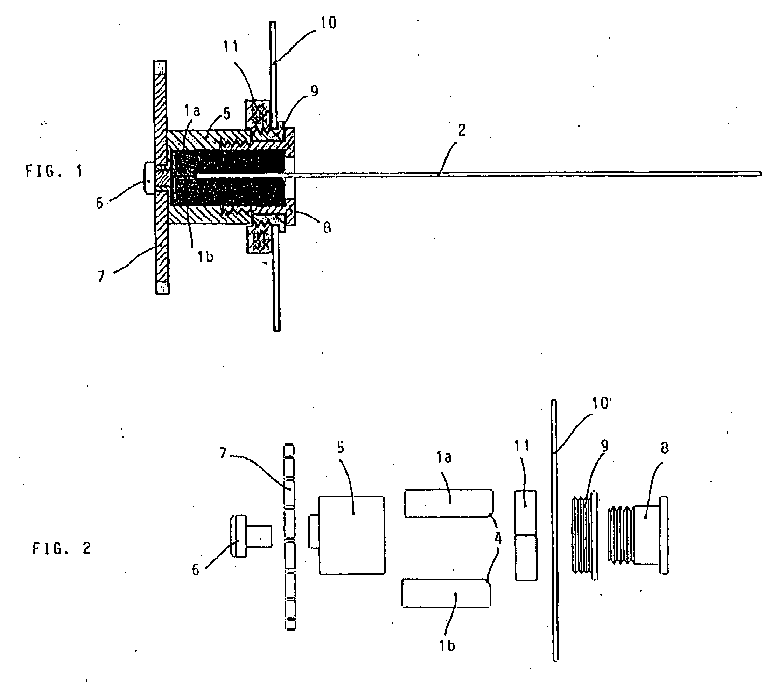

The two parts 1a and 1b of the body are inserted into the shell 5, to an end of which is fixed, by means of a screw 6, the gear wheel 7 which receives the motion from a motor with respective transmission. On the other end of the shell 5 is screwed the bushing 8 which fixes the two parts of body 1a and 1b into the shell. The bushing 8 is supported, with rotation possibility, by the external bushing 9, which is fixed to the frame 10 by means of the nut 11, as shown in figure 1.

The body 1 can be carried out, in alternative, in more parts and it is carried out by a heat resistant material and, preferably, made of a pliable and anti-skidding material such as, for example, "Santoprene®". The cavity 3 has a transversal section with slightly elongated shape, in a manner that it can block the skewers with transversal section of circular, rectangular shape, or of other shapes.

The main advantage of the present invention is to allow the fast insertion and the safe blocking of skewers having any kind of shape, and allowing the motorized rotation thereof.

## Claims

1. Support for blocking different kinds of skewers, allowing the motorized rotation thereof, said support including a body (1) with an axial seat (3) for housing and for blocking the end of a skewer (2); the body (1) is connected to a frame (10) with rotating possibility and is coupled to a gear (7), or the like, which receives the movement from the motor which rotates the battery of skewers: said support being
**characterized in that** the body (1) with the housing seat (3) for the end of the skewer (2) is constituted by two or more parts (1a,1b) maintained in approached position by means of a shell (5).

2. Support according to claims 1 **characterized in that** the housing seat (3) for the end of the skewer has slightly elongated shaped transversal section, so that said seat can block the skewers with circular, rectangular section or with other shapes.

3. Support according to any of the preceding claims **characterized in that** the front part (4) of the housing seat (3) for the end of the skewer, opportunely it becomes wider, in such a manner to facilitate the insertion.

4. Support according to any of the preceding claims **characterized in that** the body (1) is carried out with a heat resistant, anti-skidding and opportunely pliable material, such as, for example "Santoprene®", in such a manner that it can adapt itself to different kinds of skewers.

5. Support according to any of the preceding claims **characterized in that** the shell (5) is screwed to a bushing (8) which fixes the body (1) into the shell, said bushing (8) is supported, with rotation possibility, by an external bushing (9), which is fixed to the frame (10) by a nut (11) of the like.

6. Support according to any of the preceding claims **characterized in that** the shell (5), which supports the body (1), has fixed to an end thereof, a gear wheel (7) which receives the motion from a motor with respective transmission.

## Patentansprüche

1. Unterstützung zum Blockieren verschiedener Arten von Spießen, die die motorisierte Drehung der Spieße erlaubt und folgende Merkmale aufweist:
einen Körper (1) mit einem axialen Sitz (3) zum Aufnehmen und zum Blockieren des Endes eines Spießes (2), während
der Körper (1) ist mit einem drehbaren Rahmen (10) verbunden und an ein Zahnrad (7) oder ähnliches gekoppelt, das die Bewegung vom Motor empfängt, was die Spießbatterie dreht, und
die Unterstützung ist **dadurch gekennzeichnet, dass**
der Körper (1) mit dem Aufnahmesitz (3) für das Ende des Spießes (2) aus zwei oder mehr Teilen (1a 1b) besteht, die mittels einer Ummantelung (5) in angenäherter Position gehalten werden.

2. Unterstützung gemäß Anspruch 1, **dadurch gekennzeichnet, dass** der Aufnahmesitz (3) für das Ende des Spießes (2) einen leicht verlängert gestalteten Querabschnitt aufweist, so dass der Sitz die Spieße mit kreisförmigem, rechteckigem Abschnitt oder mit anderen Formen blockieren kann.

3. Unterstützung gemäß einem der vorhergehenden Ansprüche, **dadurch gekennzeichnet, dass** der vordere Teil (4) des Aufnahmesitzes (3) für das Ende des Spießes vorteilhafterweise derart weiter wird, dass die Einführung erleichtert ist.

4. Unterstützung gemäß einem der vorhergehenden Ansprüche, **dadurch gekennzeichnet, dass** der Körper (1) mit einem hitzebeständigen, Anti-Rutsch und biegbaren Material, so wie beispielsweise "Santoprene ®", derart ausgeführt ist, dass er sich selbst an verschiedene Arten von Spießen anpassen kann.

5. Unterstützung gemäß einem der vorhergehenden Ansprüche, **dadurch gekennzeichnet, dass** die Ummantelung (5) an eine Buchse (8) geschraubt ist, die den Körper (1) in der Ummantelung fixiert, während die Buchse (8) durch eine äußere Buchse (9), die an dem Rahmen (10) durch eine Mutter (11) oder ähnlichem fixiert ist, drehbar unterstützt wird.

6. Unterstützung gemäß einem der vorhergehenden Ansprüche, **dadurch gekennzeichnet, dass** an einem Ende der Ummantelung (5), die den Körper (1) unterstützt, ein Zahnrad (7) fixiert ist, das die Bewegung von einem Motor in Bezug auf die Übertragung aufnimmt.

## Revendications

1. Support pour bloquer différents types de brochettes, permettant leur rotation motorisée, ledit support comportant un corps (1) avec un siège axial (3) pour envelopper et pour bloquer l'extrémité d'une brochette (2) ; le corps (1) est connecté à un cadre (10) avec possibilité de rotation et est couplé à un engrenage (7), ou similaire, lequel reçoit le mouvement du moteur qui fait tourner la batterie de brochettes ; ledit support étant **caractérisé en ce que** le corps (1) avec le siège enveloppant (3) pour l'extrémité de la brochette (2) est constitué par deux ou plus pièces (1a,1b) maintenues en position rapprochée par le moyen d'une coquille (5).

2. Support suivant la revendication 1, **caractérisé en ce que** le siège enveloppant (3) pour l'extrémité de la brochette a une section transversale en forme légèrement allongée, de manière à ce que ledit siège puisse bloquer les brochettes à section circulaire, rectangulaire, ou avec d'autres formes.

3. Support suivant une quelconque des revendications précédentes, **caractérisé en ce que** la partie frontale (4) du siège enveloppant (3) pour l'extrémité de la brochette, devient opportunément plus large, de manière à faciliter l'insertion.

4. Support suivant une quelconque des revendications précédentes, **caractérisé en ce que** le corps (1) est réalisé avec un matériau résistant à la chaleur, antidérapant, et opportunément flexible, tel que, par exemple, le « Santoprene® », de manière à être adaptable à des différents types de brochettes.

5. Support suivant une quelconque des revendications précédentes, **caractérisé en ce que** la coquille (5) est vissée à une douille (8) fixant le corps (1) dans la coquille, ladite douille (8) étant soutenue, avec possibilité de rotation, par une douille externe (9), laquelle est fixée au cadre (10) par un écrou (11) ou similaire.

6. Support suivant une quelconque des revendications précédentes, **caractérisé en ce que** la coquille (5), laquelle soutient le corps (1), comporte, fixée sur une de ses extrémités, une roue dentée (7), recevant le mouvement d'un moteur avec une transmission respective.
